# EUROPÄISCHE PATENTSCHRIFT

(11) **EP 2 459 421 B1**
(45) Veröffentlichungstag und Bekanntmachung des Hinweises auf die Patenterteilung: **13.03.2013**
(21) Anmeldenummer: 10727667.7
(22) Anmeldetag: 25.05.2010
(51) Int. Cl.: B60T 13/66, B60T 15/18, B60T 8/17, B60T 7/12, B60T 7/20

(54) **PNEUMATISCHE BREMSANLAGE FÜR EIN ANHÄNGER UND BREMSSTEUERMODULATOR**
PNEUMATIC BRAKE SYSTEM FOR A TRAILER, AND BRAKE CONTROL MODULATOR
SYSTÈME DE FREINAGE PNEUMATIQUE POUR REMORQUE, ET MODULATEUR DE COMMANDE DE FREINS

(30) Priorität: 06.07.2009 DE 102009031785
(43) Veröffentlichungstag der Anmeldung: 06.06.2012
(73) Patentinhaber: WABCO GmbH, 30453 Hannover (DE)
(72) Erfinder: RISSE, Rainer, 30982 Pattensen-Reden (DE); STENDER, Axel, 31787 Hameln (DE)
(74) Vertreter: Lauerwald, Jörg
(86) Internationale Anmeldenummer: PCT/EP2010/003174
(87) Internationale Veröffentlichungsnummer: WO 2011/003491

(56) Entgegenhaltungen:
- EP-A1- 1 571 061
- EP-A1- 1 953 054
- EP-A2- 0 586 203
- EP-A2- 2 058 186
- DE-A1- 4 425 789
- DE-A1- 10 062 625
- DE-A1- 10 236 921
- DE-A1-102005 058 799
- DE-A1-102007 002 020
- DE-A1-102007 020 278
- DE-B3-102007 053 766

## Beschreibung

Die Erfindung betrifft eine pneumatische Bremsanlage für ein Anhängefahrzeug gemäß dem Oberbegriff des Patentanspruchs 1 sowie einen Bremssteuermodulator für eine solche Bremsanlage gemäß dem Oberbegriff der Patentansprüche 9 und 10.

Eine gattungsgemäße Bremsanlage ist beispielsweise aus der DE 103 56 672 B4, so wie aus den EP 0586293 A2 oder DE 100 62625 A1 bekannt.

Derartige pneumatische Anhängerbremsanlagen weisen üblicherweise eine Notbremsfunktion auf, die eine automatische Abbremsung des Anhängers bewirkt, wenn ein Abriss der Druckluftvorratsleitung vom Zugfahrzeug vorliegt. Die Notbremsung wird allgemein bei Defekten der Vorratsleitung ausgelöst, die zu einem starken Druckverlust führen. Je nach Bremsanlagenkonzept kann die Notbremsung entweder über die Betriebsbremsfunktion oder die Federspeicher-Bremsfunktion des Anhängers bewirkt werden. Bei der Notbremsung über die Betriebsbremsfunktion wird Druckluft aus einem Vorratsbehälter des Anhängers in die Betriebsbremszylinder automatisch eingesteuert wird.

Die aus der DE 103 56 672 B4 bekannte Bremsanlage sieht alternativ vor, die Notbremsung über eine Entlüftung der Federspeicherzylinder von kombinierten. Federspeicher-Bremszylindern zu bewirken. Solche kombinierten Federspeicher-Bremszylinder - auch Kombi-Bremszylinder genannt - weisen hintereinander angeordnet einen Federspeicherzylinder und einen Betriebsbremszylinder auf, die jeweils getrennt voneinander mit Druckluft betätigbar sind. Beide Zylinder sind zur Betätigung der Radbremse (z.B. Scheibenbremse) eingerichtet.

Eine solche Bremsung über ein Entlüften der Federspeicherzylinder hat zur Folge, dass die mit solchen Federspeichern ausgerüsteten Fahrzeugräder mit hoher Bremskraft gebremst werden, was zu einem Blockieren der Räder führen kann. Eine in dem Anhänger vorgesehene Antiblockerfunktion wirkt üblicherweise nur auf die druckluftgesteuerten Betriebsbremszylinder der Kombi-Bremszylinder, so dass die Antiblockierfunktion das Blockieren der Räder durch die Federspeicher nicht verhindern kann.

Um dieses Problem der durch die Federspeicher blockierenden Räder zu lösen, wird in der DE 103 56 672 B4 vorgeschlagen, bei entsprechendem Regelbedarf eines Antiblockiersystems die Federspeicherzylinder bei aktivierter Notbremsfunktion über ein Wechselventil 35 wieder mit Druckluft zu befüllen, so dass die Federspeicher-Bremswirkung aufgehoben wird, und über die Betriebsbremszylinder eine übliche Antiblockierregelung durchzuführen.

Um hierbei einen konstanten Druck in den Federspeicherzylindern zu erhalten, schlägt die DE 103 56 672 B4 vor, die Antiblockierregelung für eine Fahrzeugseite zu deaktivieren und damit die vom Antiblockier-Algorithmus hervorgerufene Druckmodulation auf dieser Fahrzeugseite auszuschließen, so dass nicht unerwünscht durch die Antiblockierregelung der Druck in den Federspeicherteilen wieder gesenkt wird.

Die zuvor beschriebene Lösung hat den Nachteil, dass eine Fahrzeugseite einen hohen Bremsdruck aufweist, um die Wirkung der Federspeicherbremsanlage zu kompensieren, und es dadurch zum Blockieren der Räder dieser Fahrzeugseite aufgrund der deaktivierten Antiblockierregelung kommen kann. Ein Blockieren von Rädern kann zu Reifenschäden (Flachstellen) führen. Ein Blockieren nur einer Fahrzeugseite birgt zudem das Risiko eines Ausbrechens des Anhängers auf glattem Untergrund, da die blockierenden Räder ein Moment um die Hochachse des Anhängers erzeugt, das zur Instabilität des gesamten Fahrzeugzuges führen kann.

Der Erfindung liegt daher die Aufgabe zugrunde, eine pneumatische Bremsanlage und einen Bremssteuermodulator für einen Anhänger anzugeben, bei denen auch im Notbremsfall eine vollwertige Abbremsung des Anhängers mit Antiblockierschutzfunktion ermöglicht wird.

Diese Aufgabe wird durch die in dem Anspruch 1 angegebene Bremsanlage sowie den in den Ansprüchen 9 und 10 angegebenen Bremssteuermodulator gelöst. Vorteilhafte Weiterbildungen der Erfindung sind in den Unteransprüchen angegeben.

Die Erfindung hat den Vorteil, mit geringem Aufwand das eingangs erläuterte Problem zu lösen. Durch ein konstruktiv relativ einfach und mit wenigen Bauteilen aufgebautes Federspeicherneutralisierventil wird eine hinreichend druckstabile Druckluftbeaufschlagung der Federspeicherzylinder während der Antiblockierregelung bewirkt, so dass die ABS-Funktion auf beiden Fahrzeugseiten voll wirksam sein kann und so Reifenschäden (Flachstellen) und eventuelle Fahrinstabilitäten des Anhängefahrzeugs vermieden werden können. Insbesondere wird ein gefürchtetes Ausbrechen des Anhängers oder ein Einknicken des Fahrzeugzuges vermieden.

Das Federspeicherneutralisierventil bewirkt eine Druckstabilisierung des in den Federspeicherzylindern eingesteuerten Drucks auf einem solchen Druckniveau, dass eine unerwünschte Bremsbetätigung durch die Speicherfedern vermieden wird. Je nach Ausführungsform des Federspeicherneutralisierventil wird entweder der ABS-modulierte Druck stabilisiert, d.h. abgesehen von geringen Druckschwankungen auf einem gewissen Mindestniveau gehalten, oder ein von der ABS-Druckmodulation unbeeinflusster, an sich im Wesentlichen konstanter Druck in die Federspeicherzylinder eingesteuert und gehalten.

Das erfindungsgemäße zusätzliche Federspeicherneutralisierventil kann mit verhältnismäßig geringem Aufwand z.B. in vorhandene Ventileinrichtungen, z.B. in die Ventilanordnung eines Bremssteuermodulators eines Anhängers, integriert werden. Hierdurch kann die Erfindung ohne nennenswerte zusätzliche Kosten realisiert werden. Insgesamt ergibt sich aufgrund der Erfindung ein erheblicher Sicherheitsgewinn beim Betrieb von Lastzügen ohne wesentliche Zusatzkosten.

Die Entlüftung der Federspeicherzylinder im Rahmen der Notbremsfunktion kann über das die Notbremsfunktion steuernde Anhängerbremsventil erfolgen. Vorteilhaft kann die Entlüftung auch über ein durch das Anhängerbremsventil gesteuertes Ventil, z.B. ein Schnelllöseventil, erfolgen. Ein Schnelllöseventil erlaubt eine besonders schnelle Entlüftung der Federspeicherzylinder.

Die Erfindung beinhaltet zudem einen Bremssteuermodulator zur Steuerung einer pneumatischen Bremsanlage eines Anhängerfahrzeuges. Einer solcher Bremssteuermodulator kann beispielsweise als EBS-Modulator (EBS = elektronisch gesteuertes Bremssystem) ausgeführt sein. Vorteilhaft weist der Bremssteuermodulator als integrierte Bauteile wenigstens eine elektronische Steuereinrichtung mit Antiblockierfunktion und eine von der elektronischen Steuereinrichtung gesteuerte Druckmodulationsventileinrichtung auf.

In einer vorteilhaften Ausführungsform weist der Bremssteuermodulator zusätzlich als integriertes Bauteil das Federspeicherneutralisierventil auf. Hierdurch kann die Erfindung als kompakte und relativ kostengünstige Einrichtung hergestellt und vertrieben werden.

In einer weiteren vorteilhaften Ausführungsform weist der Bremssteuermodulator einen Steuerausgang zur Ansteuerung eines Federspeicherneutralisierventils auf. Der Steuerausgang kann als elektrischer Anschluß, z.B. in einem Steckverbinder, ausgeführt sein. Ein solches Herausführen des Steuerausgangs für das Federspeicherneutralisierventil erlaubt eine erhöhte flexibilität bei der Konzeption der Bremsanlage.

Der Bremssteuermodulator beinhaltet bereits die wesentlichen Funktionen der Bremsanlage des Anhängefahrzeuges. Hierfür weist der Bremssteuermodulator eine Vielzahl von Anschlüssen auf, z.B. für einen Druckluftvorratsbehälter, ein Anhängerbremsventil und einen oder mehrere Kombi-Bremszylinder.

Gemäß einer vorteilhaften Weiterbildung der Erfindung kann ein Wechselventil als integriertes Bauteil in dem Bremssteuermodulator vorgesehen sein.

Die Erfindung wird nachfolgend anhand von Ausführungsbeispielen unter Verwendung von Zeichnungen näher erläutert.

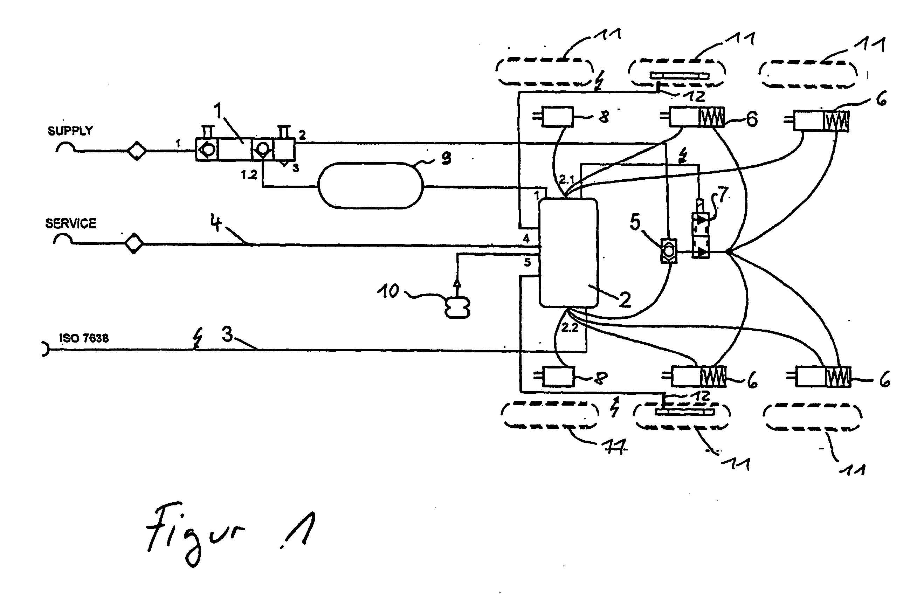

Die Figuren 1 bis 4 zeigen eine pneumatische Bremsanlage eines Anhängers in schematischer Darstellung, wobei nur die für die Erläuterung der Erfindung erforderlichen Elemente im Detail dargestellt sind. In den Figuren werden gleiche Bezugszeichen füreinander entsprechende Elemente verwendet.

In den Figuren sind links die pneumatischen und elektrischen Verbindungsanschlüsse zum Zugfahrzeug dargestellt. Ein mit dem Begriff "SUPPLY" gekennzeichneter Druckluftanschluss dient zum Anschluss einer Druckluftvorratsleitung des Zugfahrzeugs. Ein mit dem Begriff "SERVICE" gekennzeichneter Anschluss dient zum Anschluss einer Betriebsbremsleitung des Zugfahrzeugs. Über den Anschluss "SERVICE" wird der von dem Fahrer des Zugfahrzeugs über das Bremspedal eingestellte Betriebsbremsdruck an das Anhängefahrzeug gegeben und über eine Druckluftleitung 4 einem EBS-Modulator 2 zugeführt. Des Weiteren ist ein elektrischer Anschluss zum Zugfahrzeug vorgesehen, der mit dem Begriff "ISO 7638" gekennzeichnet ist. Bei der Norm ISO 7638 handelt es sich um eine genormte Schnittstelle zwischen Zugfahrzeugen und Anhängefahrzeugen im Nutzfahrzeugbereich. Über die Schnittstelle wird beispielsweise der von dem Fahrer des Zugfahrzeugs über das Bremspedal eingestellte Betriebsbremsdruck des Zugfahrzeugs als elektrisches Signal übertragen. Die Schnittstelle ISO 7638 ist als serielle Datenschnittstelle nach dem CAN-Protokoll ausgestaltet. Der ISO 7638-Anschluss gemäß Figur 1 ist über eine elektrische Leitung 3 mit dem eine elektronische Steuereinrichtung aufweisenden EBS-Modulator 2 verbunden.

Der EBS-Modulator 2 ist der Bremssteuermodulator der Bremsanlage des Anhängers. Der EBS-Modulator 2 ist damit die zentrale Steuereinheit eines elektrisch gesteuerten pneumatischen Bremssystems gemäß Figur 1. Der EBS-Modulator 2 weist hierfür elektromagnetisch ansteuerbare Ventile sowie eine elektronische Steuereinrichtung auf, die insgesamt in einer Baueinheit integriert sind.

Die Bremsanlage gemäß Figur 1 weist als Anhängerbremsventil ein Park- und Rangierventil 1 auf, das beispielsweise gemäß DE 198 54 881 A1 ausgeführt sein kann. Das Park- und Rangierventil 1 weist Bedienelemente auf, über die der Anhänger in eine Parkstellung oder - aus der Parkstellung - in eine Rangierstellung verbracht werden kann, ohne dass die elektrische Steuerung des EBS-Modulators 2 verfügbar sein muss, z.B. bei vom Zugfahrzeug abgekoppeltem, stromversorgungslosen Anhänger. Das Park- und Rangierventil 1 ist eingangsseitig mit dem Vorratsanschluss "SUPPLY" verbunden. Des Weiteren weist das Park- und Rangierventil 1 eine pneumatische Verbindung zu einem Vorratsbehälter 9 in dem Anhänger auf. Der Vorratsbehälter 9 ist zusätzlich über eine Druckluftleitung zur Zufuhr von Vorratsdruck mit dem EBS-Modulator 2 verbunden. An den EBS-Modulator 2 sind des Weiteren die Druckluftleitung 4 und die elektrische Leitung 3 angeschlossen.

Der EBS-Modulator 2 steuert den Bremsdruck in Bremszylindern 6, 8. Hierbei sind Bremszylinder 6 vorgesehen, die als Kombi-Bremszylinder ausgebildet sind und als getrennte Druckluftkreise einen Betriebsbremszylinder und einen daran angebrachten Federspeicherzylinder aufweisen. Der Federspeicherzylinder wirkt invertierend, d.h. eine in dem Federspeicherzylinder vorgesehene Speicherfeder betätigt die Radbremse, z.B. die Bremsbeläge einer Scheibenbremse, wenn die Druckluft im Federspeicherzylinder entlüftet wird. Entsprechend wird bei Druckbeaufschlagung des Federspeicherzylinders eine Bremsbetätigung durch die Speicherfeder beendet. Der Anhänger kann zusätzlich mit einfachen Bremszylindern 8 ausgestattet sein, die lediglich Betriebsbremszylinder aufweisen.

Der EBS-Modulator 2 ist drucklufttechnisch zweikreisig ausgebildet. Ein erster Bremskreis mit einem Druckmodulationsausgang 2.1 ist über Druckluftleitungen mit den Betriebsbremszylindern der Bremszylinder 6, 8 der einen Fahrzeugseite verbunden. Der andere Bremskreis mit einem Druckmodulationsausgang 2.2 ist über Druckluftleitungen mit den Betriebsbremszylindern der Bremszylinder 6, 8 der anderen Fahrzeugseite verbunden. Die Federspeicherzylinder der Bremszylinder 6 sind über einzelne Druckluftleitungen auf eine gemeinsame Druckluftleitung zusammengeführt und über ein hinsichtlich seiner Funktion noch zu erläuterndes Magnetventil 7 und ein Wechselventil 5 mit einem Anschluss 2 des Park- und Rangierventils 1 verbunden. Über diesen Druckluftpfad kann das Park- und Rangierventil 1 bei Erkennung einer abgerissenen Vorratsleitung "SUPPLY" die Druckluft in den Federspeicherzylindern der Bremszylinder 6 entlüften und damit die Notbremsung durchführen.

Der EBS-Modulator 2 ist über eine Druckluftleitung ebenfalls mit dem Wechselventil 5 verbunden. Das Wechselventil 5 hat die Funktion, den jeweils höheren Druck an seinen Eingangsanschlüssen, d.h. an dem mit dem Park- und Rangierventil 1 verbundenen Anschluss und dem mit dem EBS-Modutator 2 verbundenen Anschluss, an seinem Ausgangsanschluss, der über das Magnetventil 7 mit den Federspeicherzylindern verbunden ist, auszugeben. Das Wechselventil 5 hat somit die Funktion eines Doppelrückschlagventils.

Das Magnetventil 7 dient als Federspeicherneutralisierventil, durch das die von der elektronischen Steuereinrichtung in den Federspeicherzylinder eingefüllte Druckluft zumindest teilweise haltbar ist. Das Magnetventil 7 ist über eine elektrische Leitung mit dem EBS-Modulator 2 verbunden. Der EBS-Modulator 2 kann dementsprechend bei Bedarf das Magnetventil 7 ansteuern. Das Magnetventil 7 weist eine Durchgangstellung auf, die gemäß Figur 1 aktiviert ist. Die Durchgangsstellung wird bei unbetätigtem Magneten des Magnetventils 7 eingenommen. Bei Betätigung des Magneten des Magnetventils 7 schaltet das Magnetventil 7 in eine Sperrstellung. In der Sperrstellung ist die Verbindung zwischen dem Wechselventil 5 und den Federspeicherzylindern der Bremszylinder 6 getrennt. In der Durchgangsstellung ist diese Verbindung hergestellt.

Der EBS-Modulator 2 ist ferner mit Luftfederbälgen 10 einer Luftfederung des Anhängers verbunden.

Im Fall eines Abrisses der Vorratsleitung "SUPPLY" bewirkt das Park- und Rangierventil 1 eine automatische Entlüftung der Federspeicherzylinder der Bremszylinder 6 über das dann in der Durchgangsstellung befindliche Magnetventil 7 und das Wechselventil 5. Die Entlüftung erfolgt über einen Entlüftungsanschluss 3 des Park- und Rangierventils 1. Dadurch werden die Federspeicherzylinder drucklos, und das Anhängefahrzeug wird automatisch eingebremst. Der EBS-Modulator 2 überwacht permanent über Raddrehzahlsensoren 12, die über elektrische Leitungen mit dem EBS-Modulator 2 verbunden sind, das Raddrehverhalten der Räder 11 des Anhängers. Wenn der EBS-Modulator dabei ein Blockieren von Rädern 11 bzw. eine Blockiertendenz erkennt, steuert der EBS-Modulator 2 die Betriebsbremse des Anhängefahrzeugs mit einem vorgegebenen Bremsdruck, z.B. dem vollen Bremsdruck, an. Hierfür entnimmt der EBS-Modulator 2 aus dem Druckluftvorratsbehälter 9 entsprechende Druckluft und führt diese über die Druckmodulationsausgänge 2.1 und 2.2 den Betriebsbremszylindern der Bremszylinder 6, 8 zu. Über den ebenfalls mit dem ausgegebenen Betriebsbremsdruck am Druckmodulationsausgang 2.2 des EBS-Modulators 2 verbundenen Anschluss des Wechselventils 5 wird dieser Bremsdruck über das in der Durchgangsstellung befindliche Magnetventil 7 auch in die Federspeicherzylinder der Bremszylinder 6 eingeleitet. Hierdurch werden die Federspeicher gelöst. Bei der Notbremsung wird somit durch den EBS-Modulator 2 die Federspeicherbremsung von einer Bremsung durch die Betriebsbremse abgelöst. Sobald die Federspeicherzylinder einen ausreichenden Druck aufweisen und die Federspeicher gelöst sind, betätigt der EBS-Modulator 2 das Magnetventil 7 zur Umschaltung in die Sperrstellung. Hierdurch sind die Federspeicherzylinder der Bremszylinder 6 von dem Wechselventil 5 bzw. dem am Druckmodulationsausgang 2.2 des EBS-Modulators 2 anliegenden Betriebsbremsdruck abgekoppelt. Damit wird der in den Federspeicherzylindern der Bremszylinder 6 vorliegende Druck eingesperrt und somit im Wesentlichen gehalten. Hiernach führt der EBS-Modulator 2 eine Antiblockierregelung zur Verhinderung des Blockierens der Räder 11 nach einprogrammierten Algorithmen durch. Die hierbei am Druckmodulationsausgang 2.2 des EBS-Modulators 2 und somit am Wechselventil 5 auftretenden Druckschwankungen im Verlaufe der Antiblockierregelung können aufgrund des in Sperrstellung befindlichen Magnetventils 7 keinen Einfluss auf die Federspeicherzylinder der Bremszylinder 6 nehmen.

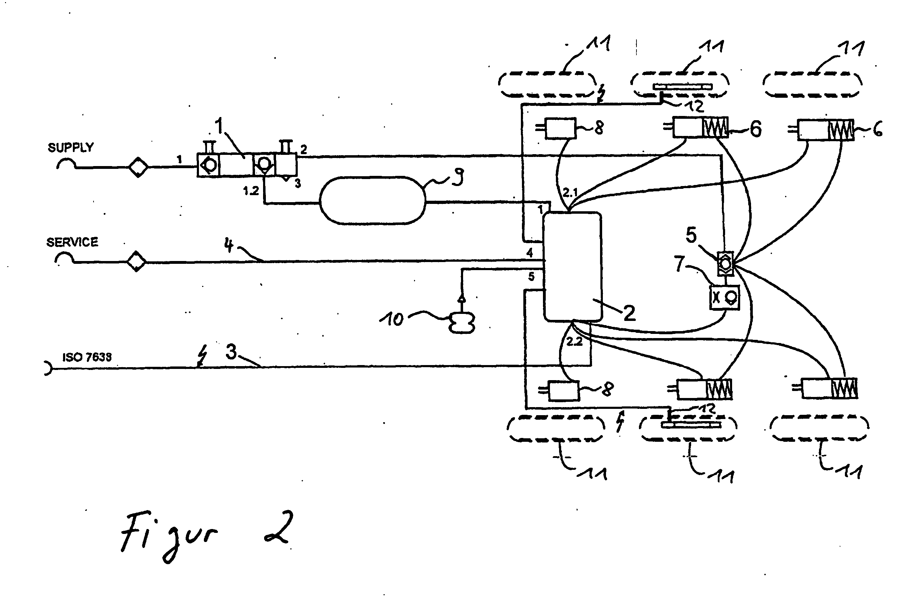

Die Figur 2 zeigt eine alternative Ausführung und Anordnung des Federspeicherneutralisierventils 7. Gemäß Figur 2 sind die Druckluftleitungen aller Federspeicherzylinder an dem Ausgangsanschluss des Wechselventils 5 angeschlossen. An dem mit dem EBS-Modulator 2 verbundenen Eingangsanschluss des Wechselventils 5 ist das Federspeicherneutralisierventil 7 vorgesehen, d.h. in der Druckluftleitung zwischen dem EBS-Modulator 2 und dem Wechselventil 5. Das Federspeicherneutralisierventil 7 gemäß Figur 2 ist als Rückschlagventil mit Rückströmung ausgebildet. Das Federspeicherneutralisierventil 7 erlaubt damit eine Druckluftströmung von dem EBS-Modulator 2 in Richtung zum Wechselventil 5 und damit zu den Federspeicherzylindern mit verhältnismäßig großem Strömungsquerschnitt, während in umgekehrter Richtung durch Verwendung einer Drosselstelle mit im Verhältnis dazu relativ kleinem Strömungsquerschnitt nur eine vergleichsweise geringe Druckluftströmung möglich ist. Hierdurch kann die Belüftung der Federspeicherzylinder der Bremszylinder 6 von dem EBS-Modulator 2 relativ schnell erfolgen, eine Entlüftung in Richtung zum EBS-Modulator 2 jedoch nur erheblich verzögert. Durch die Wahl eines geeigneten kleinen Strömungsquerschnitts der Drosselstelle kann somit auch durch das Federspeicherneutralisierventil 7 gemäß Figur 2 eine hinreichende drucklufttechnische Entkopplung der Federspeicherzylinder der Bremszylinder 6 von dem während der ABS-Bremsung modulierten Druck am Druckmodulationsausgang 2.2 des EBS-Modulators realisiert werden. Somit wird durch Federspeicherneutralisierventil 7 gemäß Figur 2 eine unerwünschte Bremsbetätigung durch die Federspeicher während der Antiblockierregelung vermieden.

Das Federspeicherneutralisierventil 7 gemäß Figur 2 hat den Vorteil, mit wenigen einfach herzustellenden Bauelementen aufgebaut zu sein und insbesondere keine gesonderte elektrische Betätigung durch den EBS-Modulator zu erfordern.

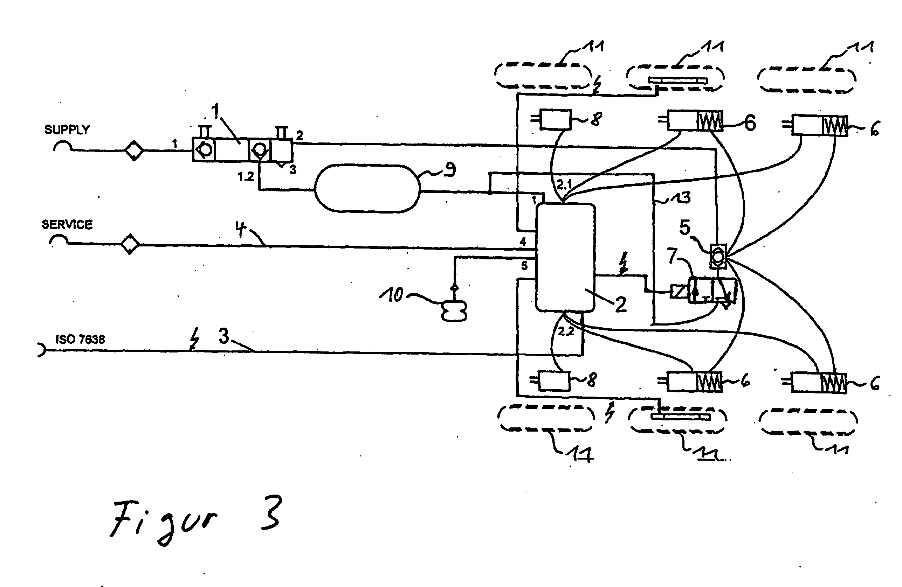

Die Figur 3 zeigt eine alternative Ausführung und Anordnung des Federspeicherneutralisierventils 7. Als Federspeicherneutralisierventil 7 ist ein Magnetventil vorgesehen, das wiederum vom EBS-Modulator 2 über ein elektrisches Signal betätigbar ist. Das Magnetventil 7 ist als 3/2-Wegeventil ausgeführt. In seiner in der Figur 3 dargestellten Entlüftungsstellung verbindet das Magnetventil 7 einen Eingangsanschluss des Wechselventils 5 mit der Atmosphäre, d.h. der Eingangsanschluss des Wechselventils 5 wird entlüftet. Bei einer Betätigung des Magnetventils 7 durch den EBS-Modulator 2 verbindet das Magnetventil 7 den Eingangsanschluss des Wechselventils 5 über eine Druckluftleitung 13 mit dem Druckluftvorratsbehälter. Hierdurch wird Vorratsdruck über das Magnetventil 7 und das Wechselventil 5 in die Federspeicherzylinder der Bremszylinder 6 angesteuert. Hierdurch werden die Federspeicher gelöst. In entsprechender Weise, wie zu der Figur 1 beschrieben, steuert der EBS-Modulator 2 das Magnetventil 7 im Falle einer Notbremsung und bei Erkennen eines Regelbedarfs der Antiblockierregelung derart an, dass die Federspeicher gelöst werden und über die Betriebsbremszylinder eine Antiblockierregelung erfolgen kann. Wie erkennbar ist, wird auch bei der Ausführungsform gemäß Figur 3 über das Federspeicherneutralisierventil 7 ein im Wesentlichen konstanter Druck in den Federspeicherzylindern der Bremszylinder 6 im Zustand der Notbremsung und gleichzeitigem Regelungsbedarf des Antiblockiersystems aufrechterhalten.

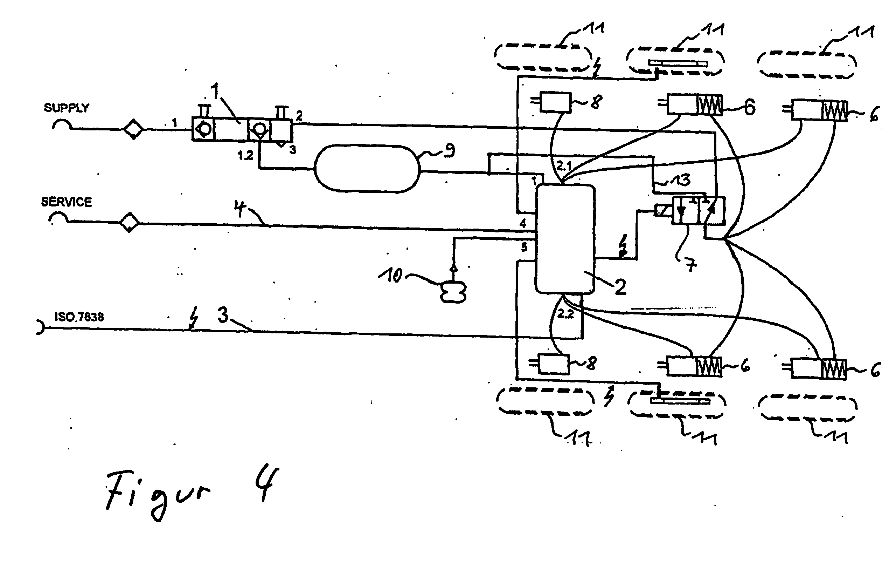

Die Figur 4 zeigt eine alternative Ausführungsform der Erfindung, bei der das Federspeicherneutralisierventil 7 wie gemäß Figur 3 beschrieben als elektrisch betätigbares Magnetventil ausgebildet ist, das vom EBS-Modulator 2 über ein elektrisches Signal betätigbar ist. Das Magnetventil 7 ist wiederum als 3/2-Wegeventil ausgeführt. Gemäß Figur 4 ist der in der Figur 3 als Entlüftungsanschluss des Magnetventils 7 vorgesehene Anschluss nicht mit der Atmosphäre verbunden, sondern direkt mit dem Anschluss des Park- und Rangierventils 1. Dies hat den Vorteil, dass das Wechselventil 5 nicht erforderlich ist und somit ein Bauteil der Bremsanlage eingespart werden kann. Hierdurch kann die Erfindung wiederum kostengünstiger realisiert werden. Im Übrigen entspricht die Ausführungsform gemäß Figur 4 der Ausführungsform gemäß Figur 3.

Erkennbar ist, dass es bei sämtlichen erläuterten Ausführungsformen der Erfindung vorteilhaft ist, das Federspeicherneutralisierventil 7 und gegebenenfalls das Wechselventil 5 baulich in den EBS-Modulator 2 zu integrieren. Hierdurch entfällt die Notwendigkeit, ein separates Gehäuse für das Federspeicherneutralisierventil 7 oder das Wechselventil 5 vorzusehen. Auch die Installation der Bremsanlage in dem Anhänger wird erleichtert, da weniger einzelne Bauteile installiert werden müssen.

## Patentansprüche

1. Pneumatische Bremsanlage für ein Anhängefahrzeug,
a) die Bremsanlage weist wenigstens ein Anhängerbremsventil (1), eine elektronische Steuereinrichtung mit Antiblockierfunktion, eine von der elektronischen Steuereinrichtung gesteuerte Druckmodulations-Ventileinrichtung und einen Kombi-Bremszylinder (6) mit einem Federspeicherzylinder und einem Betriebsbremszylinder auf,
b) der Betriebsbremszylinder ist mit einem Druckmodulationsausgang (2.1, 2.2) der Druckmodulations-Ventileinrichtung verbunden,
c) das Anhängerbremsventil (1) weist eine Notbremsfunktion auf, durch die bei defekter Vorratsleitung zum Zugfahrzeug der Federspeicherzylinder entlüftbar ist,
d) die elektronische Steuereinrichtung ist dazu eingerichtet, bei ausgelöster Notbremsfunktion den Federspeicherzylinder über den Druckmodulationsausgang (2.2) mit Druckluft zu befüllen,
e) die elektronische Steuereinrichtung ist dazu eingerichtet, bei ausgelöster Notbremsfunktion mittels einer Druckmodulation am Druckmodulationsausgang (2.1, 2.2) die Antiblockierfunktion auszuführen,
**dadurch gekennzeichnet, dass**
f) ein Federspeicherneutralisierventil (7) vorgesehen ist, durch das die von der elektronischen Steuereinrichtung in den Federspeicherzylinder eingefüllte Druckluft zumindest teilweise haltbar ist.

2. Pneumatische Bremsanlage nach Anspruch 1, **dadurch gekennzeichnet, dass** der Federspeicherzylinder über ein Wechselventil (5) mit dem Anhängerbremsventil (1) und dem Druckmodulationsausgang (2.2) verbunden ist.

3. Pneumatische Bremsanlage nach Anspruch 2, **dadurch gekennzeichnet, dass** das Federspeicherneutralisierventil (7) in der Druckluftleitung zwischen dem Federspeicherzylinder und dem Wechselventil (5) angeordnet ist.

4. Pneumatische Bremsanlage nach Anspruch 2, **dadurch gekennzeichnet, dass** das Federspeicherneutralisierventil (7) in der Druckluftleitung zwischen dem Druckmodulationsausgang (2.2) und dem Wechselventil (5) angeordnet ist.

5. Pneumatische Bremsanlage nach wenigstens einem der vorhergehenden Ansprüche, **dadurch gekennzeichnet, dass** das Federspeicherneutralisierventil (7) als von der elektronischen Steuereinrichtung gesteuertes Ventil ausgebildet ist.

6. Pneumatische Bremsanlage nach Anspruch 5, **dadurch gekennzeichnet, dass** das Federspeicherneutralisierventil (7) als elektrisch betätigbares Magnetventil ausgebildet ist.

7. Pneumatische Bremsanlage nach wenigstens einem der vorhergehenden Ansprüche, **dadurch gekennzeichnet, dass** das Federspeicherneutralisierventil (7) als Rückschlagventil mit Rückströmung ausgebildet ist.

8. Pneumatische Bremsanlage nach wenigstens einem der vorhergehenden Ansprüche, **dadurch gekennzeichnet, dass** der Federspeicherzylinder im Rahmen der Notbremsfunktion über das Anhängerbremsventil (1) oder über ein durch das Anhängerbremsventil (1) gesteuertes Ventil entlüftbar ist.

9. Bremssteuermodulator zur Steuerung einer pneumatischen Bremsanlage eines Anhängefahrzeuges,
a) der Bremssteuermodulator (2) weist als integrierte Bauteile wenigstens eine elektronische Steuereinrichtung mit Antiblockierfunktion und eine von der elektronischen Steuereinrichtung gesteuerte Druckmodulations-Ventileinrichtung auf,
b) ein Druckmodulationsausgang (2.1, 2.2) der Druckmodulations-Ventileinrichtung ist mit einem Betriebsbremszylinder (6) eines Kombi-Bremszylinders der pneumatischen Bremsanlage des Anhängefahrzeuges verbindbar,
c) die elektronische Steuereinrichtung ist dazu eingerichtet, bei einer von einem Anhängerbremsventil (1) der pneumatischen Bremsanlage des Anhängefahrzeuges ausgelösten Notbremsfunktion, bei der bei defekter Vorratsleitung zum Zugfahrzeug ein Federspeicherzylinder des Kombi-Bremszylinders (6) entlüftbar ist, den Federspeicherzylinder über den Druckmodulationsausgang (2.2) mit Druckluft zu befüllen,
d) die elektronische Steuereinrichtung ist dazu eingerichtet, bei ausgelöster Notbremsfunktion mittels einer Druckmodulation am Druckmodulationsausgang (2.1, 2.2) die Antiblockierfunktion auszuführen,
**dadurch gekennzeichnet, dass**
e) der Bremssteuermodulator (2) als integriertes Bauteil ein Federspeicherneutralisierventil (7) aufweist, durch das die von der elektronischen Steuereinrichtung in den Federspeicherzylinder eingefüllte Druckluft zumindest teilweise haltbar ist.

10. Bremssteuermodulator zur Steuerung einer pneumatischen Bremsanlage eines Anhängefahrzeuges,
a) der Bremssteuermodulator (2) weist als integrierte Bauteile wenigstens eine elektronische Steuereinrichtung mit Antiblockierfunktion und eine von der elektronischen Steuereinrichtung gesteuerte Druckmodulations-Ventileinrichtung auf,
b) ein Druckmodulationsausgang (2.1, 2.2) der Druckmodulations-Ventileinrichtung ist mit einem Betriebsbremszylinder (6) eines Kombi-Bremszylinders der pneumatischen Bremsanlage des Anhängefahrzeuges verbindbar,
c) die elektronische Steuereinrichtung ist dazu eingerichtet, bei einer von einem Anhängerbremsventil (1) der pneumatischen Bremsanlage des Anhängefahrzeuges ausgelösten Notbremsfunktion, bei der bei defekter Vorratsleitung zum Zugfahrzeug ein Federspeicherzylinder des Kombi-Bremszylinders (6) entlüftbar ist, den Federspeicherzylinder über den Druckmodulationsausgang (2.2) mit Druckluft zu befüllen,
d) die elektronische Steuereinrichtung ist dazu eingerichtet, bei ausgelöster Notbremsfunktion mittels einer Druckmodulation am Druckmodulationsausgang (2.1, 2.2) die Antiblockierfunktion auszuführen,
**dadurch gekennzeichnet, dass**
e) der Bremssteuermodulator (2) weist einen Steuerausgang zur Ansteuerung eines Federspeicherneutralisierventils (7) auf, durch das die von der elektronischen Steuereinrichtung in den Federspeicherzylinder eingefüllte Druckluft zumindest teilweise haltbar ist.

11. Bremssteuermodulator nach Anspruch 9 oder 10, **dadurch gekennzeichnet, dass** der Bremssteuermodulator (2) als integriertes Bauteil ein Wechselventil (5) aufweist, über das der Federspeicherzylinder mit dem Anhängerbremsventil (1) und dem Druckmodulationsausgang (2.2) verbindbar ist.

12. Bremssteuermodulator nach Anspruch 11, **dadurch gekennzeichnet, dass** das Federspeicherneutralisierventil (7) in der Druckluftleitung zwischen dem Federspeicherzylinder und dem Wechselventil (5) anzuordnen ist.

13. Bremssteuermodulator nach Anspruch 11, **dadurch gekennzeichnet, dass** das Federspeicherneutralisierventil (7) in der Druckluftleitung zwischen dem Druckmodulationsausgang (2.2) und dem Wechselventil (5) anzuordnen ist.

14. Bremssteuermodulator nach wenigstens einem der Ansprüche 9 bis 13, **dadurch gekennzeichnet, dass** das Federspeicherneutralisierventil (7) über ein elektrisches Ansteuersignal von der elektronischen Steuereinrichtung absteuerbar ist.

15. Bremssteuermodulator nach Anspruch 14, **dadurch gekennzeichnet, dass** das Federspeicherneutralisierventil (7) als elektrisch betätigbares Magnetventil ausgebildet ist.

16. Bremssteuermodulator nach wenigstens einem der Ansprüche 9 bis 15, **dadurch gekennzeichnet, dass** das Federspeicherneutralisierventil (7) als Rückschlagventil mit Rückströmung ausgebildet ist.

## Claims

1. Pneumatic brake system for a towed vehicle,
a) the brake system having at least one trailer brake valve (1), an electronic control device with anti-lock function, a pressure modulation valve device which is controlled by the electronic control device, and a combination brake cylinder (6) with a spring energy cylinder and a service brake cylinder,
b) the service brake cylinder being connected to a pressure modulation outlet (2.1, 2.2) of the pressure modulation valve device,
c) the trailer brake valve (1) having an emergency brake function, by way of which the spring energy cylinder can be ventilated in the case of a defective supply line to the traction vehicle,
d) the electronic control device being set up to fill the spring energy cylinder with compressed air via the pressure modulation outlet (2.2) in the case of a triggered emergency brake function,
e) the electronic control device being set up to carry out the anti-lock function by means of a pressure modulation at the pressure modulation outlet (2.1, 2.2) in the case of a triggered emergency brake function,
**characterized in that**
f) a spring-force accumulator neutralizing valve (7) is provided, by way of which the compressed air which is filled into the spring energy cylinder by the electronic control device can be stopped at least partially.

2. Pneumatic brake system according to Claim 1, **characterized in that** the spring energy cylinder is connected via a two-way valve (5) to the trailer brake valve (1) and the pressure modulation outlet (2.2).

3. Pneumatic brake system according to Claim 2, **characterized in that** the spring-force accumulator neutralizing valve (7) is arranged in the compressed air line between the spring energy cylinder and the two-way valve (5).

4. Pneumatic brake system according to Claim 2, **characterized in that** the spring-force accumulator neutralizing valve (7) is arranged in the compressed air line between the pressure modulation outlet (2.2) and the two-way valve (5).

5. Pneumatic brake system according to at least one of the preceding claims, **characterized in that** the spring-force accumulator neutralizing valve (7) is configured as a valve which is controlled by the electronic control device.

6. Pneumatic brake system according to Claim 5, **characterized in that** the spring-force accumulator neutralizing valve (7) is configured as an electrically actuable solenoid valve.

7. Pneumatic brake system according to at least one of the preceding claims, **characterized in that** the spring-force accumulator neutralizing valve (7) is configured as a return valve with backflow.

8. Pneumatic brake system according to at least one of the preceding claims, **characterized in that**, within the context of the emergency brake function, the spring energy cylinder can be ventilated via the trailer brake valve (1) or via a valve which is controlled by the trailer brake valve (1).

9. Brake control modulator for controlling a pneumatic brake system of a towed vehicle,
a) the brake control modulator (2) having, as integrated components, at least one electronic control device with anti-lock function, and a pressure modulation valve device which is controlled by the electronic control device,
b) it being possible for a pressure modulation outlet (2.1, 2.2) of the pressure modulation valve device to be connected to a service brake cylinder (6) of a combination brake cylinder of the pneumatic brake system of the towed vehicle,
c) the electronic control device being set up to fill the spring energy cylinder with compressed air via the pressure modulation outlet (2.2) in the case of an emergency brake function which is triggered by a trailer brake valve (1) of the pneumatic brake system of the towed vehicle and in which a spring energy cylinder of the combination brake cylinder (6) can be ventilated in the case of a defective supply line to the traction vehicle,
d) the electronic control device being set up to carry out the anti-lock function by means of a pressure modulation at the pressure modulation outlet (2.1, 2.2) in the case of a triggered emergency brake function,
**characterized in that**
e) the brake control modulator (2) has, as an integrated component, a spring-force accumulator neutralizing valve (7), by way of which the compressed air which is filled into the spring energy cylinder by the electronic control device can be stopped at least partially.

10. Brake control modulator for controlling a pneumatic brake system of a towed vehicle,
a) the brake control modulator (2) having, as integrated components, at least one electronic control device with anti-lock function, and a pressure modulation valve device which is controlled by the electronic control device,
b) it being possible for a pressure modulation outlet (2.1, 2.2) of the pressure modulation valve device to be connected to a service brake cylinder (6) of a combination brake cylinder of the pneumatic brake system of the towed vehicle,
c) the electronic control device being set up to fill the spring energy cylinder with compressed air via the pressure modulation outlet (2.2) in the case of an emergency brake function which is triggered by a trailer brake valve (1) of the pneumatic brake system of the towed vehicle and in which a spring energy cylinder of the combination brake cylinder (6) can be ventilated in the case of a defective supply line to the traction vehicle,
d) the electronic control device being set up to carry out the anti-lock function by means of a pressure modulation at the pressure modulation outlet (2.1, 2.2) in the case of a triggered emergency brake function,
**characterized in that**
e) the brake control modulator (2) has a control outlet for actuating a spring-force accumulator neutralizing valve (7), by way of which the compressed air which is filled into the spring energy cylinder by the electronic control device can be stopped at least partially.

11. Brake control modulator according to Claim 9 or 10, **characterized in that** the brake control modulator (2) has, as an integrated component, a two-way valve (5), via which the spring energy cylinder can be connected to the trailer brake valve (1) and the pressure modulation outlet (2.2).

12. Brake control modulator according to Claim 11, **characterized in that** the spring-force accumulator neutralizing valve (7) is to be arranged in the compressed air line between the spring energy cylinder and the two-way valve (5).

13. Brake control modulator according to Claim 11, **characterized in that** the spring-force accumulator neutralizing valve (7) is to be arranged in the compressed air line between the pressure modulation outlet (2.2) and the two-way valve (5).

14. Brake control modulator according to at least one of Claims 9 to 13, **characterized in that** the spring-force accumulator neutralizing valve (7) can be actuated by the electronic control device via an electric actuating signal.

15. Brake control modulator according to Claim 14, **characterized in that** the spring-force accumulator neutralizing valve (7) is configured as an electrically actuable solenoid valve.

16. Brake control modulator according to at least one of Claims 9 to 15, **characterized in that** the spring-force accumulator neutralizing valve (7) is configured as a return valve with backflow.

## Revendications

1. Système de freinage pneumatique pour un véhicule à remorque,
a) le système de freinage présentant au moins une vanne de freinage de remorque (1), un dispositif de commande électronique avec fonction antiblocage, un dispositif à vanne de modulation de la pression commandé par le dispositif de commande électronique et un cylindre de frein combiné (6) comprenant un cylindre accumulateur à ressort et un cylindre de frein de service,
b) le cylindre de frein de service étant relié avec une sortie de modulation de la pression (2.1, 2.2) du dispositif à vanne de modulation de la pression,
c) la vanne de freinage de remorque (1) présentant une fonction de freinage de secours qui permet de purger le cylindre accumulateur à ressort en cas de défaillance de la conduite de réserve vers le véhicule tracteur,
d) le dispositif de commande électronique étant configuré pour, lorsque la fonction de freinage de secours est déclenchée, remplir le cylindre accumulateur à ressort avec de l'air comprimé par le biais de la sortie de modulation de la pression (2.2),
e) le dispositif de commande électronique étant configuré pour, lorsque la fonction de freinage de secours est déclenchée, exécuter la fonction d'antiblocage au moyen d'une modulation de la pression à la sortie de modulation de la pression (2.1, 2.2), **caractérisé en ce que**
f) il est prévu une vanne de neutralisation de l'accumulateur à ressort (7) par le biais de laquelle l'air comprimé injecté dans le cylindre accumulateur à ressort par le dispositif de commande électronique peut au moins partiellement être retenu.

2. Système de freinage pneumatique selon la revendication 1, **caractérisé en ce que** le cylindre accumulateur à ressort est relié par le biais d'une vanne à deux voies (5) avec la vanne de freinage de remorque (1) et la sortie de modulation de la pression (2.2).

3. Système de freinage pneumatique selon la revendication 2, **caractérisé en ce que** la vanne de neutralisation de l'accumulateur à ressort (7) est disposée dans la conduite pneumatique entre le cylindre accumulateur à ressort et la vanne à deux voies (5).

4. Système de freinage pneumatique selon la revendication 2, **caractérisé en ce que** la vanne de neutralisation de l'accumulateur à ressort (7) est disposée dans la conduite pneumatique entre la sortie de modulation de la pression (2.2) et la vanne à deux voies (5).

5. Système de freinage pneumatique selon au moins l'une des revendications précédentes, **caractérisé en ce que** la vanne de neutralisation de l'accumulateur à ressort (7) est réalisée sous la forme d'une vanne commandée par le dispositif de commande électronique.

6. Système de freinage pneumatique selon la revendication 5, **caractérisé en ce que** la vanne de neutralisation de l'accumulateur à ressort (7) est réalisé sous la forme d'une électrovanne pouvant être actionnée électriquement.

7. Système de freinage pneumatique selon au moins l'une des revendications précédentes, **caractérisé en ce que** la vanne de neutralisation de l'accumulateur à ressort (7) est réalisée sous la forme d'un clapet anti-retour avec reflux.

8. Système de freinage pneumatique selon au moins l'une des revendications précédentes, **caractérisé en ce que** le cylindre accumulateur à ressort peut être purgé dans le cadre de la fonction de freinage de secours par le biais de la vanne de freinage de remorque (1) ou par le biais d'une vanne commandée par la vanne de freinage de remorque (1).

9. Modulateur de commande de frein pour commander un système de freinage pneumatique d'un véhicule à remorque,
a) le modulateur de commande de frein (2) présentant comme composants intégrés au moins un dispositif de commande électronique avec fonction antiblocage et un dispositif à vanne de modulation de la pression commandé par le dispositif de commande électronique,
b) une sortie de modulation de la pression (2.1, 2.2) du dispositif à vanne de modulation de la pression pouvant être reliée avec un cylindre de frein de service (6) d'un cylindre de frein combiné du système de freinage pneumatique du véhicule à remorque,
c) le dispositif de commande électronique étant configuré pour, lorsqu'une fonction de freinage de secours est déclenchée par une vanne de freinage de remorque (1) du système de freinage pneumatique du véhicule à remorque, avec laquelle un cylindre accumulateur à ressort du cylindre de frein combiné (6) peut être purgé en cas de défaillance de la conduite de réserve vers le véhicule tracteur, remplir le cylindre accumulateur à ressort avec de l'air comprimé par le biais de la sortie de modulation de la pression (2.2),
d) le dispositif de commande électronique étant configuré pour, lorsque la fonction de freinage de secours est déclenchée, exécuter la fonction d'antiblocage au moyen d'une modulation de la pression à la sortie de modulation de la pression (2.1, 2.2),
**caractérisé en ce que**
e) le modulateur de commande de frein (2) présente comme composant intégré une vanne de neutralisation de l'accumulateur à ressort (7) par le biais de laquelle l'air comprimé injecté dans le cylindre accumulateur à ressort par le dispositif de commande électronique peut au moins partiellement être retenu.

10. Modulateur de commande de frein pour commander un système de freinage pneumatique d'un véhicule à remorque,
a) le modulateur de commande de frein (2) présentant comme composants intégrés au moins un dispositif de commande électronique avec fonction antiblocage et un dispositif à vanne de modulation de la pression commandé par le dispositif de commande électronique,
b) une sortie de modulation de la pression (2.1, 2.2) du dispositif à vanne de modulation de la pression pouvant être reliée avec un cylindre de frein de service (6) d'un cylindre de frein combiné du système de freinage pneumatique du véhicule à remorque,
c) le dispositif de commande électronique étant configuré pour, lorsqu'une fonction de freinage de secours est déclenchée par une vanne de freinage de remorque (1) du système de freinage pneumatique du véhicule à remorque, avec laquelle un cylindre accumulateur à ressort du cylindre de frein combiné (6) peut être purgé en cas de défaillance de la conduite de réserve vers le véhicule tracteur, remplir le cylindre accumulateur à ressort avec de l'air comprimé par le biais de la sortie de modulation de la pression (2.2),
d) le dispositif de commande électronique étant configuré pour, lorsque la fonction de freinage de secours est déclenchée, exécuter la fonction d'antiblocage au moyen d'une modulation de la pression à la sortie de modulation de la pression (2.1, 2.2),
**caractérisé en ce que**
e) le modulateur de commande de frein (2) présente une sortie de commande pour commander une vanne de neutralisation de l'accumulateur à ressort (7) par le biais de laquelle l'air comprimé injecté dans le cylindre accumulateur à ressort par le dispositif de commande électronique peut au moins partiellement être retenu.

11. Modulateur de commande de frein selon la revendication 9 ou 10, **caractérisé en ce que** le modulateur de commande de frein (2) présente comme composant intégré une vanne à deux voies (5) par le biais de laquelle le cylindre accumulateur à ressort peut être relié avec la vanne de freinage de remorque (1) et la sortie de modulation de la pression (2.2).

12. Modulateur de commande de frein selon la revendication 11, **caractérisé en ce que** la vanne de neutralisation de l'accumulateur à ressort (7) doit être disposée dans la conduite pneumatique entre le cylindre accumulateur à ressort et la vanne à deux voies (5).

13. Modulateur de commande de frein selon la revendication 11, **caractérisé en ce que** la vanne de neutralisation de l'accumulateur à ressort (7) doit être disposée dans la conduite pneumatique entre la sortie de modulation de la pression (2.2) et la vanne à deux voies (5).

14. Modulateur de commande de frein selon au moins l'une des revendications 9 à 13, **caractérisé en ce que** la vanne de neutralisation de l'accumulateur à ressort (7) peut être commandée par le dispositif de commande électronique par le biais d'un signal de commande électrique.

15. Modulateur de commande de frein selon la revendication 14, **caractérisé en ce que** la vanne de neutralisation de l'accumulateur à ressort (7) est réalisée sous la forme d'une électrovanne pouvant être actionnée électriquement.

16. Modulateur de commande de frein selon au moins l'une des revendications 9 à 15, **caractérisé en ce que** la vanne de neutralisation de l'accumulateur à ressort (7) est réalisée sous la forme d'un clapet anti-retour avec reflux.
